# EUROPÄISCHE PATENTANMELDUNG

(11) **EP 1 229 414 A2**
(43) Veröffentlichungstag der Anmeldung: **07.08.2002**
(21) Anmeldenummer: 02001761.2
(22) Anmeldetag: 25.01.2002
(51) Int. Cl.: G05B 19/418, H04L 12/40

(54) **Mehrprotokollfähige Datenübertragungsgeräte und Datenkommunikationssysteme**

(30) Priorität: 31.01.2001 DE 10104143
(71) Anmelder: VEGA Grieshaber KG, 77709 Wolfach (DE)
(72) Erfinder: Gaiser, Martin, Dipl.-Ing. (FH), 72275 Alpirsbach (DE)
(74) Vertreter: Patentanwälte Westphal, Mussgnug & Partner

(57) **Zusammenfassung**

Die Erfindung betrifft Master- oder Slave-Geräte für die Datenkommunikation auf einem Bus, an den diverse Geräte anschließbar sind. Das Master-Gerät (2) ist in der Lage, ein an den Bus angeschlossenes Slave-Gerät (1) mit Meldungen gemäß einer Mehrzahl unterschiedlicher Protokolle anzusprechen und festzustellen, ob das Slave-Gerät auf das Protokoll korrekt reagiert. So kann es mit Slave-Geräten zusammen arbeiten, die jeweils nur ein Protokoll beherrschen, wobei die von verschiedenen Slave-Geräten verwendeten Protokolle unterschiedlich sein können. Andererseits wird ein mehrprotokollfähiges Slave-Gerät vorgeschlagen, das eine über den Bus (3) empfangene Meldung gemäß einer Mehrzahl unterschiedlicher Protokolle auszuwerten vermag und wenn die Auswertung gemäß einem der verwendeten Protokolle eine ausführbare Anweisung ergibt, diese auszuführen.

## Beschreibung

Die vorliegende Erfindung betrifft Geräte für die Datenkommunikation auf einem Bus sowie ein Datenkommunikationssystem, die zum Austausch von Meldungen gemäß einer Mehrzahl unterschiedlicher Protokolle in der Lage sind.

Auf dem Gebiet der Prozessautomatisierung sind eine Mehrzahl von Protokollen für die Datenkommunikation verbreitet, von denen die bekanntesten der sogenannte Profibus und der Fieldbus der Fieldbus Foundation (FF)sind. Diese beiden Protokolle sind untereinander nicht kompatibel, so dass nach unterschiedlichen Protokollen arbeitende Kommunikationsgeräte nicht an einem gemeinsamen Bus eingesetzt werden und miteinander kommunizieren können. Dies zwingt die Hersteller von Datenkommunikationsgeräten dazu, sich in ihrem Produktspektrum entweder auf eines der verbreiteten Busprotokolle festzulegen, mit der Folge, dass Anwender, des jeweils anderen Protokolls nicht bedient werden können, oder kostspielige Doppelentwicklungen zu betreiben, um alle potentiellen Abnehmer mit Geräten für das von ihnen bevorzugte Protokoll versorgen zu können. Eine Konsequenz der letzteren Lösung ist, dass die Geräte in einer großen Typenvielfalt produziert werden müssen. Diese Typenvielfalt macht die Lagerhaltung von fertigen Geräten kostspielig; die Lagerhaltung ist jedoch erforderlich, um den Bedarf der Abnehmer kurzfristig befriedigen zu können.

Auch für die Anwender der Geräte selbst ist die Typenvielfalt jedoch störend, denn sie birgt die Gefahr, dass aus Unkenntnis Geräte eingekauft werden, die mit dem vom Anwender eingesetzten Bussystem inkompatibel sind.

Es besteht daher sowohl seitens der Hersteller als auch der Anwender solcher Datenkommunikationsgeräte ein Interesse daran, die Typenvielfalt dieser Geräte zu reduzieren.

Aufgabe der Erfindung ist, einen Weg aufzuzeigen, der eine solche Reduzierung der Typenvielfalt zuläßt.

Bei Datenkommunikationsgeräten, die an einem Bus betrieben werden, wird zwischen Master- und Slave-Geräten unterschieden, wobei als Master-Gerät ein Gerät angesehen wird, dass die Berechtigung oder die Fähigkeit hat, ohne Koordination mit anderen Geräten eine Meldung auf dem Bus zu senden, und als Slave-Geräte diejenigen Geräte bezeichnet werden, die diese Fähigkeit oder Berechtigung nicht haben und zum Senden von Meldungen auf eine Genehmigung durch ein Master-Gerät angewiesen sind. Dabei kann wohlgemerkt ein gegebenes Gerät zeitlich abwechselnd sowohl als Master- als auch als Slave-Gerät fungieren.

Entsprechend dieser Unterscheidung der Datenkommunikationsgeräte wird die Aufgabe der Erfindung zum einen gelöst durch ein Master-Gerät nach Anspruch 1 und zum anderen durch ein Slave-Gerät nach Anspruch 3.

Das Master-Gerät ist gekennzeichnet durch seine Fähigkeit, ein an dem Bus angeschlossenes Slave-Gerät mit Meldungen gemäß einer Mehrzahl unterschiedlicher Protokolle anzusprechen, zu entscheiden, ob das angesprochene Slave-Gerät eine gemäß dem verwendeten Protokoll auswertbare Antwort liefert, und wenn ja, die empfangene Antwort anhand dieses Protokolls auszuwerten. D.h., wenn das Master-Gerät von einem nach einem ersten Protokoll angesprochenen Slave-Gerät keine brauchbare Antwort erhält, versucht es automatisch, dieses mit einer Meldung nach einem zweiten Protokoll anzusprechen, wobei es die verschiedenen von ihm beherrschten Protokolle durchprobiert, bis es eine auswertbare Antwort von dem Slave-Gerät empfängt oder alle zur Verfügung stehenden Protokolle erfolglos durchprobiert sind.

Da das Durchprobieren unterschiedlicher Protokolle für jede einzelne Meldung mit einem hohen Zeitaufwand verbunden ist, ist das Master-Gerät vorzugsweise in der Lage, dem Slave-Gerät das Protokoll, das zu einer auswertbaren Antwort des Slave-Geräts geführt hat, für die weitere Kommunikation mit dem Slave-Gerät fest zuzuordnen. D.h., dass das Master-Gerät für die weitere Kommunikation mit dem Slave-Gerät von vornherein dasjenige Protokoll verwendet, das zu der auswertbaren Antwort geführt hat, ohne zuvor noch andere durchzuprobieren.

Das erfindungsgemäße Slave-Gerät ist gekennzeichnet durch seine Fähigkeit, eine über den Bus empfangene Meldung gemäß einer Mehrzahl unterschiedlicher Protokolle auszuwerten, zu entscheiden, ob die Auswertung gemäß dem verwendeten Protokoll eine von dem Slave-Gerät ausführbare Anweisung ergibt, und, wenn ja, die Anweisung auszuführen.

Ein solches Slave-Gerät ist kompatibel mit jedem Master-Gerät, das wenigstens eine der von dem Slave-Gerät beherrschten Protokolle anwendet.

Auch beim Slave-Gerät kann die Ausführung der in einer Meldung enthaltenen Anweisung beschleunigt werden, wenn das Slave-Gerät in der Lage ist, das Protokoll , nach dem die empfangene Meldung auswertbar war, für die weitere Kommunikation über den Bus vorzuwählen. So wird die Wahrscheinlichkeit von vergeblichen Auswerteversuchen reduziert.

Besonders bevorzugt ist eine Weiterentwicklung des Slave-Geräts, das in der Lage ist, das Protokoll, nach dem die empfangene Meldung auswertbar war, für die weitere Kommunikation mit dem Absender dieser Meldung vorzuwählen. Ein solches Slave-Gerät kennt für jedes weitere an den Bus angeschlossene Gerät, von dem es bereits eine Meldung empfangen hat, das von diesem Gerät verwendete Protokoll und kann anhand der Absenderadresse einer Meldung das verwendete Protokoll erkennen, ohne dass es versuchen muss, die Meldung zu interpretieren und eine darin enthaltene Anweisung zu identifizieren. Ein solches Gerät kann daher schnell und effizient mit diversen anderen Geräten an einem Bus zusammenarbeiten, die jeweils Meldungen nach unterschiedlichen Protokollen aussenden.

Die Slave-Geräte umfassen vorzugsweise einen Sensor, insbesondere zum Erfassen von Prozessgrößen wie etwa eines Füllstandes, der mit Hilfe von über den Bus empfangenen Meldungen konfigurierbar und/oder abfragbar ist.

Die von den Geräten beherrschten Kommunikationsprotokolle umfassen vorzugsweise wenigstens das Fieldbus-Protokoll und das Profibus-Protokoll.

Gegenstand der Erfindung ist auch ein Datenkommunikationssystem mit einem Bus, an den wenigstens ein Master- oder Slave-Gerät vom oben beschriebenen Typ angeschlossen ist.

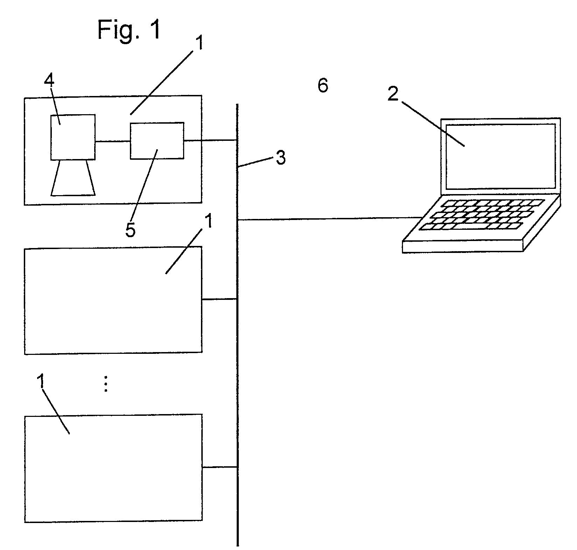

Weitere Merkmale und Vorteile der Erfindung ergeben sich aus der nachfolgenden Beschreibung von Ausführungsbeispielen mit Bezug auf die beigefügte Figur.

Diese zeigt rein schematisch ein Datenkommunikationssystem mit einem Master-Gerät 2 und einer Mehrzahl von Slave-Geräten 1, die an einen gemeinsamen Bus 3 angeschlossen sind.

Es wird zunächst der Fall betrachtet, dass das Master-Gerät 2 erfindungsgemäß ausgebildet ist. Dieses Master-Gerät ist beispielsweise ein Steuerrechner für einen industriellen Produktionsprozess. Es ist in der Lage, wahlweise nach Fieldbusoder Profibus-Protokoll zu kommunizieren. Unter den Slave-Geräten 1 finden sich Geräte, die das Fieldbus-Protokoll verstehen, als auch solche, die das Profibus-Protokoll verarbeiten können. Slave-Geräte können z.B. Sensoren zum Erfassen von Prozessgrößen oder Aktoren zur Beeinflussung solcher Größen sein. Bei einer ersten Inbetriebnahme des Kommunikationssystems verfügt das Master-Gerät 2 über keinerlei Informationen über die Protokolle, die von den Slave-Geräten 1 angewendet werden. Um festzustellen, an welchen Adressen des Busses 3 Slave-Geräte vorhanden sind und welches die von ihnen verwendeten Protokolle sind, sendet das Master-Gerät 2 der Reihe nach an alle verfügbaren Adressen eine Meldung, zunächst im Profibus-, dann im Fieldbus-Format (oder umgekehrt), deren einziger Zweck es ist, ein an der betreffenden Adresse angeschlossenes Slave-Gerät 1 zu einer Antwort zu veranlassen, die es dem Master-Gerät 2 ermöglicht, die Anwesenheit des Slave-Geräts 1 festzustellen. Die Meldung kann daher im Prinzip eine beliebige Anweisung an das Slave-Gerät enthalten, sofern diese lediglich eine Antwort des Slave-Gerätes provoziert.

Wenn das Master-Gerät 2 auf eine im Profibus-Format ausgesendete Meldung eine Antwort erhält, folgert es, dass an der betreffenden Adresse ein Profibus-kompatibles-Slave-Gerät 1 angeschlossen ist und zeichnet diese Tatsache auf. Wenn nicht, sendet es an die gleiche Adresse eine Meldung im Fieldbus-Format. Wenn eine Antwort kommt, zeichnet es die Tatsache auf, dass die betreffende Adresse von einem Fieldbus-kompatiblen-Slave-Gerät belegt ist. Kommt keine Antwort, so folgert das Master-Gerät, dass die Adresse nicht belegt ist.

Nachdem alle Adressen auf diese Weise untersucht worden sind, kennt das Master-Gerät die Protokolle, mit denen die angeschlossenen Slave-Geräte 1 ansprechbar sind und sendet von nun an Meldungen an jedes von ihnen unter Verwendung des in Verbindung mit dem betreffenden Slave-Gerät 1 aufgezeichneten Protokolls. Die Meldungen können Anweisungen zur Konfigurierung des Slave-Geräts 1, im Falle eines Sensors z.B. Angaben über die zu verwendende Messauflösung, oder Anweisungen zum Senden eines erfassten Messwerts an das Master-Gerät 2 sein.

Bei denjenigen Adressen, an denen kein Slave-Gerät gefunden wurde, kann die oben beschriebene Untersuchung periodisch wiederholt werden, um so auch im Laufe des Betriebs des Datenkommunikationssystems hinzugefügte Slave-Geräte zu erkennen und in die Kommunikation miteinbeziehen zu können.

Um das Verfahren zu beschleunigen, kann ein zu untersuchender Adressbereich, der kleiner als der physikalisch mögliche ist, dem Master-Gerät von einem Benutzer vorgegeben werden.

Bei einem Fieldbus-System ist es bekannt und üblich, die angeschlossenen Geräte mit Hilfe eines Konfigurationstools einzurichten. Die beim Prüfen der Slave-Geräte auf Fieldbus-Kompatibilität verwendete Meldung kann in der Anwendung eines solchen Konfigurationstools oder von Teilen desselben bestehen, wobei eine Rückmeldung des konfigurierten Gerätes über eine erfolgreiche Konfigurierung als eine nach Fieldbus-Protokoll auswertbare Antwort an das Master-Gerät angesehen wird.

Als zweites wird der Fall betrachtet, dass eines der Slave-Geräte 1 erfindungsgemäß ausgebildet ist, das Master-Gerät 2 hingegen nur ein Protokoll beherrscht.

Wenn es sich beim Master-Gerät 1 um ein Profibus-Gerät handelt, so kann dieses zum Erkennen eines Slave-Gerätes an dessen Adresse einen sogenannten Slave-Diagnose-Befehl senden. Das Slave-Gerät wendet der Reihe nach die von ihm beherrschten Kommunikationsprotokolle an, um die Meldung auszuwerten und die Auswertung gelingt bei Anwendung des Profibus-Protokolls. Das Slave-Gerät erzeugt daraufhin eine Antwort nach dem Profibus-Protokoll, um dem Master-Gerät 2 zu melden, dass es noch nicht konfiguriert ist. Anschließend auf dem Bus 3 bzw. vom Master-Gerät 2 empfangene Meldungen, die Konfigurationsbefehle enthalten, werden von dem Slave-Gerät 1 von vornherein unter Anwendung des Profibus-Protokolls ausgewertet und ausgeführt.

Falls das Master-Gerät 2 ein Fieldbus-Gerät ist, so kann das Slave-Gerät 1 dies am Format der Meldungen erkennen, die es bei Anwendung des Fieldbus-Konfigurationstools empfängt. Nachdem das Endgerät erkannt hat, dass der Master ein Fieldbus-Gerät ist, werden weitere von ihm empfangene Meldungen unmittelbar nach Fieldbus-Protokoll ausgewertet.

Denkbar ist auch eine Anwendung, bei der ein Slave-Gerät Meldungen, die einen auszuführenden Befehl beinhalten, nicht nur vom Master-Gerät 2, sondern auch anderen Slave-Geräten 1 empfängt. Dabei können die Slave-Geräte, wenn sie einen erfindungsgemäßen Master haben, durchaus Meldungen nach unterschiedlichen Protokollen aussenden. In einem solchen System kann ein Slave-Gerät 1 auf dem Bus 3 im Laufe der Zeit Meldungen empfangen, die unterschiedlichen Protokollen angehören.

Um diese Meldungen zu verarbeiten, gibt es unterschiedliche Möglichkeiten. Eine erste, einfache Möglichkeit ist, dass das mehrprotokollfähige Slave-Gerät eine auf dem Bus 3 empfangene Meldung stets nach demjenigen Protokoll zu verarbeiten versucht, mit dem die unmittelbar zuvor empfangene Meldung erfolgreich verarbeitet werden konnte. Dies bedeutet, dass das Slave-Gerät, wenn es zuletzt eine Profibus-Meldung vom Master-Gerät 2 empfangen hat und anschließend eine Fieldbus-Meldung eines anderen Slave-Geräts empfängt, diese zunächst nach dem Profibus-Protokoll zu verarbeiten versucht und erst wenn ihr dies nicht gelingt, auf eine Verarbeitung nach Fieldbus-Protokoll umschaltet. Ein solches System ist besonders einfach zu realisieren, es hat aber den Nachteil, dass die Verarbeitung der Meldungen sich verzögert, wenn häufig Meldungen nach unterschiedlichen Protokollen auf dem Bus 3 ausgetauscht werden, und zwar ist die Verzögerung um so auffälliger, je mehr verschiedene Protokolle die Geräte beherrschen und durchprobieren müssen. Eine solche Verzögerung läßt sich vermeiden, wenn das Slave-Gerät in einer empfangenen Meldung zunächst lediglich den Absender zu identifizieren versucht und anhand einer zuvor angelegten Aufzeichnung über das von dem betreffenden Absender verwendete Protokoll unmittelbar dasjenige Protokoll zur Verarbeitung der Meldung auswählen und anwenden kann, das der Absender tatsächlich verwendet hat.

## Patentansprüche

1. Master-Gerät (2) für die Datenkommunikation auf einem Bus (3), an den diverse Geräte (1, 2) anschließbar sind, **dadurch gekennzeichnet, dass** das Master-Gerät (2) in der Lage ist, ein an den Bus (3) angeschlossenes Slave-Gerät (1) mit Meldungen gemäß einer Mehrzahl unterschiedlicher Protokolle anzusprechen, zu entscheiden, ob das angesprochene Slave-Gerät (1) eine gemäß dem verwendeten Protokoll auswertbare Antwort liefert, und, wenn ja, die empfangene Antwort anhand dieses Protokolls auszuwerten.

2. Master-Gerät nach Anspruch 1, **dadurch gekennzeichnet, dass** es in der Lage ist, dem Slave-Gerät (1) das Protokoll, das zu einer auswertbaren Antwort des Slave-Geräts (1) geführt hat, für die weitere Kommunikation mit dem Slave-Gerät (1) fest zuzuordnen.

3. Slave-Gerät (1) für die Datenkommunikation auf einem Bus (3), an den diverse Geräte (1, 2) anschließbar sind, **dadurch gekennzeichnet, dass** das Slave-Gerät in der Lage ist, eine über den Bus (3) empfangene Meldung gemäß einer Mehrzahl unterschiedlicher Protokolle auszuwerten, zu entscheiden, ob die Auswertung gemäß dem verwendeten Protokoll eine ausführbare Anweisung ergibt, und, wenn ja, die Anweisung auszuführen.

4. Slave-Gerät nach Anspruch 3, **dadurch gekennzeichnet, dass** es in der Lage ist, das Protokoll, nach dem die empfangene Meldung auswertbar war, für die weitere Kommunikation über den Bus (3) vorzuwählen.

5. Slave-Gerät nach Anspruch 3 oder 4, **dadurch gekennzeichnet, dass** es in der Lage ist, das Protokoll, nach dem die empfangene Meldung auswertbar war, für die weitere Kommunikation mit dem Absender der Meldung vorzuwählen.

6. Slave-Gerät nach einem der Ansprüche 3 bis 5 oder zur Verwendung mit einem Master-Gerät nach Anspruch 1 oder 2, **dadurch gekennzeichnet, dass** es einen Sensor, insbesondere einen Füllstandssensor, umfasst, der mit Hilfe von über den Bus (3) empfangenen Meldungen konfigurierbar und/oder abfragbar ist.

7. Gerät nach einem der vorhergehenden Ansprüche, **dadurch gekennzeichnet, dass** die Mehrzahl unterschiedlicher Protokolle zumindest das Fieldbus-Protokoll und das Profibus-Protokoll umfasst.

8. Datenkommunikationssystem mit einem zur Übertragung von Meldungen nach einer Mehrzahl unterschiedlicher Protokolle geeigneten Bus (3), an den wenigstens ein Gerät (1, 2) nach einem der vorhergehenden Ansprüche angeschlossen ist.
